# EUROPÄISCHE PATENTSCHRIFT

(11) **EP 3 314 139 B1**
(45) Veröffentlichungstag und Bekanntmachung des Hinweises auf die Patenterteilung: **27.05.2020**
(21) Anmeldenummer: 16739405.5
(22) Anmeldetag: 22.06.2016
(51) Int. Cl.: F16D 13/72

(54) **KUPPLUNGSEINRICHTUNG MIT AXIAL WIRKENDER FLUIDFÖRDEREINRICHTUNG**
CLUTCH DEVICE WITH AXIALLY-ACTING FLUID CONVEYING DEVICE
DISPOSITIF D'ACCOUPLEMENT POURVU D'UN DISPOSITIF DE TRANSPORT DE FLUIDE AGISSANT AXIALEMENT

(30) Priorität: 23.06.2015 DE 102015211528
(43) Veröffentlichungstag der Anmeldung: 02.05.2018
(73) Patentinhaber: Schaeffler Technologies AG & Co. KG, 91074 Herzogenaurach (DE)
(72) Erfinder: HUBER, Steffen, 77855 Achern (DE); GENTER, Jens, 77855 Achern (DE); STEINEL, Gerold, 77815 Bühl (DE); VOGEL, Felix, 76547 Sinzheim (DE); WEIS, Johannes, 90762 Fürth (DE); TRINKENSCHUH, Andreas, 77815 Bühl (DE)
(86) Internationale Anmeldenummer: PCT/DE2016/200286
(87) Internationale Veröffentlichungsnummer: WO 2016/206683

(56) Entgegenhaltungen:
- EP-A1- 1 930 613
- DE-A1- 3 133 478
- DE-A1- 10 049 459
- DE-A1-102014 205 380
- DE-T5-112010 003 465
- DE-T5-112013 000 259
- JP-A- S59 131 035

## Beschreibung

Die vorliegende Erfindung betrifft eine Kupplungseinrichtung zur Übertragung eines Drehmoments gemäß dem Oberbegriff des Patentanspruchs 1.

Derartige Kupplungseinrichtungen sind im Stand der Technik in zahlreichen Ausführungsformen bekannt. Bei bestimmten Anwendungsfällen kommen bevorzugt Nasskupplungen zum Einsatz, die mit einer Fluidversorgung verbunden sind. Eine besondere Bauform von Nasskupplungen stellen Lamellenkupplungen dar, bei denen ein ölförmiges Fluid mittels Schaufelrädern innerhalb der Kupplung radial verteilt wird.

Bei den bekannten Kupplungseinrichtungen ist jedoch zu beobachten, dass die Ölversorgung nicht in allen Bereichen der Kupplungseinrichtung und bei allen Betriebszuständen in dem gewünschten Maß sichergestellt ist. So kann es vorkommen, dass weiter entfernte Abschnitte wie bspw. entfernter liegende Lager nicht ausreichend mit dem Fluid versorgt werden.

Aus jeder der DE 11 2013 000 259 T5, der EP 1 930 613 A1, der DE 31 33 478 A1, der DE 11 2010 003 465 T5, der DE 100 49 459 A1, der DE 10 2014 205 380 A1 und der JP S59 131035 A ist eine Kupplungseinrichtung gemäß dem Oberbegriff des Anspruchs 1 bekannt.

Aufgabe der vorliegenden Erfindung ist es daher, die sich aus dem Stand der Technik ergebenden Probleme zumindest teilweise zu lösen und insbesondere eine Kupplungseinrichtung mit einer verbesserten Fluidversorgung anzugeben. Hierbei wird angestrebt, eine möglichst einfach zu fertigende und damit kostengünstige Lösung bereitzustellen.

Diese Aufgaben werden mit einer Vorrichtung gemäß den Merkmalen des Patentanspruchs 1 gelöst. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden in den Patentansprüchen angegebenen Merkmale in der Beschreibung näher präzisiert und erläutert, wobei weitere bevorzugte Ausführungsbeispiele der Erfindung dargestellt werden.

In einer Fluidleitung innerhalb der Kupplungseinrichtung ist eine Fördereinrichtung zur Förderung eines Fluidstroms in axialer Richtung der Drehachse vorgesehen. Bei einer Fluidleitung, welche sich sowohl durch ein feststehendes Gehäuse als auch durch wenigstens die sich drehenden ersten oder zweiten Kupplungsseiten erstreckt, kann es zu unerwünschten Fluidaustritten kommen. Bei dem Fluid handelt es sich in der Regel um ein in der Kupplungseinrichtung verwendetes Öl, das bspw. zur Lubrikation und Kühlung dient. Wird nun das Fluid durch die Fluidleitung gefördert, kommt es insbesondere an den relativ zueinander bewegten Abschnitten der Kupplungseinrichtung zu Fluidverlusten. Dies tritt insbesondere dann auf, wenn rotierende und feststehende Bauteile relativ zueinander bewegt werden. Hierbei zeigt es sich, dass es vor den rotierenden Abschnitten der Fluidleitung zu Fluidstauungen kommt, wodurch ein unerwünschtes Abströmen des Fluids in radialer Richtung begünstigt wird. Zusätzlich zu dem beschriebenen Staueffekt wird das gestaute Fluid noch in Umfangsrichtung beschleunigt, wodurch die auftretenden Fliehkräfte das radiale Abströmen zusätzlich begünstigen. Beide Effekte führen dazu, dass das Fluid nur mit hohen Verlusten und Widerständen durch die rotierenden Abschnitte der Fluidleitung gefördert wird und die in Strömungsrichtung gesehen dahinter liegenden Abschnitte der Kupplungseinrichtung nicht immer ausreichend mit Fluid versorgt werden.

Durch die Verwendung einer Fördereinrichtung innerhalb der Kupplungseinrichtung kann der Fluidstrom nun in axialer Richtung, das heißt parallel zur Drehachse der Kupplungseinrichtung, verstärkt und damit der Fluidstrom auch in den bewegten Abschnitten der Fluidleitung ausreichend groß gehalten werden.

Besonders bevorzugt ist die Kupplungseinrichtung als Trennkupplung in einem Hybridmodul angeordnet. Dies ermöglicht es, auch die komplizierteren Fluidleitungen innerhalb von Hybridmodulen in einem stets ausreichenden Maß mit Fluid zu versorgen.

Besonders vorteilhaft ist es auch, wenn zudem die Fördereinrichtung wenigstens an einer ersten oder zweiten Kupplungsseite angeordnet und dadurch die geförderte Fluidmenge drehzahlabhängig ist. Wie bereits zuvor beschrieben, tritt der Fluidverlust insbesondere dann auf, wenn Abschnitte der Kupplungseinrichtung relativ zueinander bewegt werden. Dies bedeutet im Umkehrschluss, dass eine Fördereinrichtung zur Vermeidung des Fluidverlusts vorzugsweise nur dann aktiviert sein muss, wenn diese Relativbewegung auftritt. Der Vorteil der Anordnung der Fördereinrichtung an einer sich drehenden ersten oder zweiten Kupplungsseite liegt darin, dass die für den Betrieb der Fördereinrichtung erforderliche Energie nur dann aufzubringen ist, wenn tatsächlich ein Fluidverlust zu verhindern bzw. zu reduzieren ist. Im Stillstand wird die Förderwirkung der Fördereinrichtung nicht benötigt.

Für den Einsatz der Kupplungseinrichtung sind Lamellenkupplungen und insbesondere Lastkupplungen geeignet, bei denen das zu fördernde Fluid ein Öl ist. Solche Lamellenkupplungen bzw. Nasskupplungen sind in zahlreichen Varianten verfügbar und aufgrund der Fluidversorgung in besonderem Maße thermisch und mechanisch belastbar.

Erfindungsgemäß weist die Fördereinrichtung wenigstens eine Rotor- oder Statorschaufel auf. So kann schone mit nur einer rotierenden Rotorschaufel das Fluid aufgrund des geeigneten Anstellwinkels der Rotorschaufel in axialer Richtung der Kupplungseinrichtung gefördert werden. Hierbei übt die Rotorschaufel eine Förderkraft auf das Fluid aus, die wenigstens eine in axialer Richtung gerichtete Kraftkomponente aufweist. Alternativ zu den direkten Krafteinwirkungen durch die Rotorschaufel mit einer axialen Kraftkomponente kann das Fluid durch eine Rotorschaufel auch zunächst in Umfangsrichtung beschleunigt werden. Nach dieser anfänglichen Beschleunigung in Umfangsrichtung kann dann wenigstens eine Statorschaufel vorgesehen sein, auf die das in Umfangsrichtung beschleunigte Fluid auftritt und dabei in axialer Richtung umlenkt. Auch auf diese Weise kann mit einer Kombination von Rotor- und Statorschaufel eine axiale Förderkraft auf das Fluid ausgeübt werden.

Bei einer besonders einfachen Ausführungsform ist vorgesehen, dass wenigstens die Rotor- oder die Statorschaufel im drehenden Zustand in axialer Richtung eine Förderkraft auf das Fluid ausübt. Alternativ kann aber auch die Rotorschaufel mit der Statorschaufel zusammenwirken, um auf diese Weise eine axiale Förderkraft auszuüben.

Zur Verbesserung der Förderleistung ist zudem vorgesehen, dass die Fördereinrichtung eine Mehrzahl bewegter Rotorschaufeln aufweist, die vorzugsweise auf einem Kreissegment um die Drehachse der Kupplungseinrichtung angeordnet sind. Für den Fall, dass Rotorschaufeln und Statorschaufeln zusammenwirken, kann in vorteilhafter Weise auch die Anzahl der Statorschaufeln entsprechend erhöht werden. Vorzugsweise sind dabei die Rotor- bzw. Statorschaufeln kreisförmig auf einem Kreissegment angeordnet.

Fertigungstechnisch ist es günstig, die Fördereinrichtung aus Kunststoff oder Metall zu fertigen. Die Fördereinrichtung kann bspw. als einteilige ringförmige Scheibe mit angeformten und abgewinkelten Rotorschaufeln ausgebildet werden und in einem einzigen Herstellungsvorgang als bspw. Kunststoffspritzgussteil hergestellt werden. Damit kann die Fördereinrichtung besonders kostengünstig hergestellt werden.

Schließlich ist vorgesehen, dass die Fördereinrichtung in einer Strömungsrichtung des Fluids im Bereich vor axialen Fluiddurchtrittsöffnungen von relativ zueinander bewegten Abschnitten der Fluidleitung angeordnet ist. Wie bereits zuvor beschrieben, kommt es an solchen relativ zueinander bewegten Abschnitten der Fluidleitung zu Anstauungen des Fluids, sobald die Abschnitte relativ zueinander bewegt sind. Von daher ist es besonders effizient, genau an dieser Stelle die Fördereinrichtung anzuordnen und die axiale Förderkraft an diesen Stellen auf das Fluid auszuüben, wodurch den Anstauungen des Fluids vor den bewegten Fluiddurchtrittsöffnungen effektiv entgegengewirkt wird. Im Ergebnis kann mehr Fluid durch die Fluiddurchtrittsöffnungen hindurchtreten und die dahinter liegenden Abschnitte der Kupplungseinrichtung werden besser mit Fluid versorgt.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf diese jedoch nicht beschränkt ist. In der Zeichnung zeigt schematisch:
- Fig. 1:: eine axiale Schnittansicht einer als bekannt angenommenen Kupplungseinrichtung,
- Fig.2:: eine teilweise dargestellte axiale Schnittansicht einer als bekannt angenommenen Kupplungseinrichtung nach dem Stand der Technik mit aufgezeigter Fluidströmung,
- Fig. 3:: eine perspektivische Darstellung einer drehenden Welle,
- Fig.4:: eine axiale Schnittansicht einer Kupplungseinrichtung mit einer perspektivisch dargstellten Fördereinrichtung
- Fig. 5:: eine teilweise axiale Schnittansicht einer Kupplungseinrichtung, und
- Fig. 6:: eine perspektivische Darstellung einer Fördereinrichtung mit einer drehenden Welle.

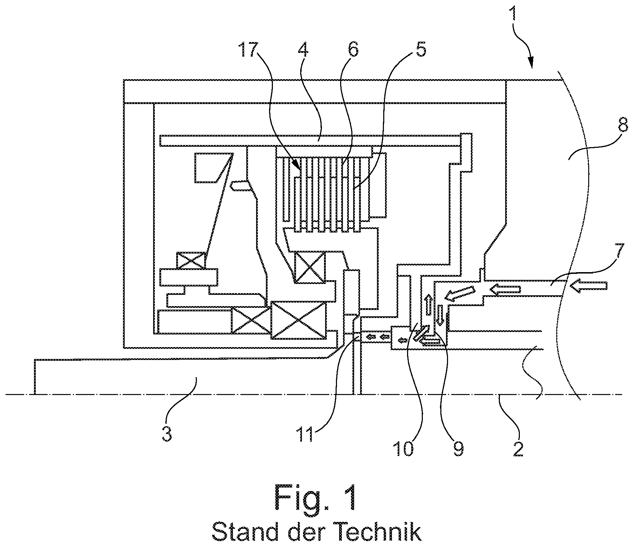

In Fig. 1 ist eine als bekannt angenommene Kupplungseinrichtung 1 zur Übertragung eines Drehmoments um eine Drehachse 2 dargestellt. Die Kupplungseinrichtung 1 weist eine erste Kupplungsseite 3 auf, die als drehende Welle ausgebildet ist.

Weiterhin weist die Kupplungseinrichtung 1 eine zweite Kupplungsseite 4 auf, wobei eine Drehmomentübertragung zwischen der ersten Kupplungsseite 3 und der zweiten Kupplungsseite 4 über Reibpartner 5 erfolgt. Die Reibpartner 5 sind als Lamellenkupplung ausgebildet, die bei entsprechender Ausübung einer Anpresskraft in axialer Richtung in Reibeingriff miteinander bringbar sind und dadurch ein Drehmoment zwischen der ersten und zweiten Kupplungsseite übertragen. Weiterhin weist die Kupplungseinrichtung 1 eine Fluidleitung 7 auf, über die ein Fluid in ein Gehäuse 8 der Kupplungseinrichtung 1 eingeleitet wird. Die dargestellten Pfeile geben schematisch die Richtung und Stärke des Fluidstroms wieder. Dabei ist erkennbar, dass zwischen einem gehäuseseitigen feststehenden Leitblech 9 und einem rotierenden Abschnitt 10 der zweiten Kupplungsseite 4 ein Fluidverlust in radialer Richtung auftritt.

Zu einer Fluiddurchtrittsöffnung 11 in der ersten Kupplungsseite 3 gelangt somit nur ein sehr stark reduzierter Teil des Fluidstroms, wodurch die linksseitig der Fluiddurchtrittsöffnung 11 liegenden Abschnitte der Kupplungseinrichtung 1 nur unzureichend mit Fluid versorgt werden.

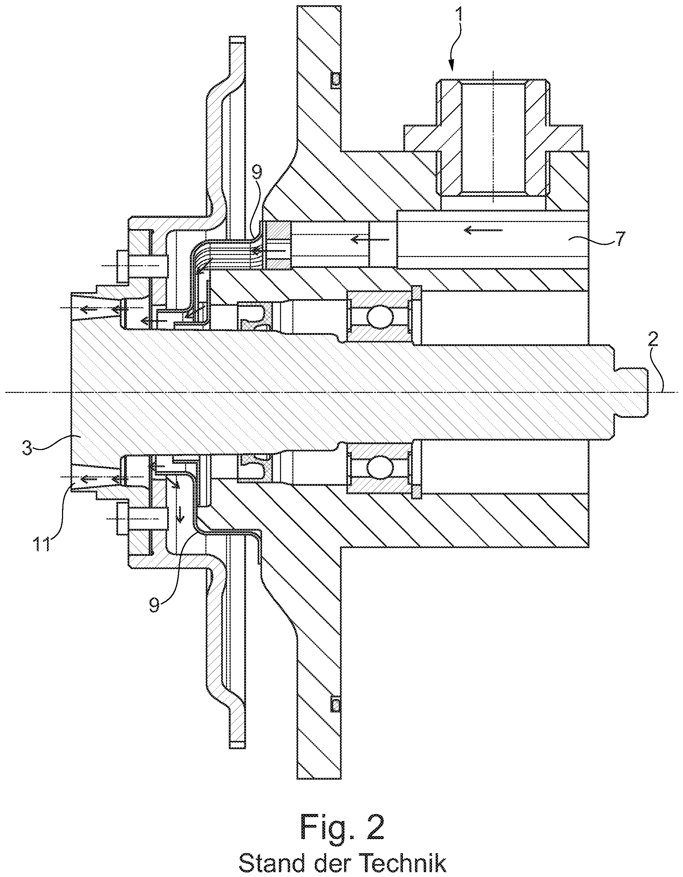

Fig. 2 zeigt eine andere als bekannt angenommene Kupplungseinrichtung 1 noch einmal in einer vergrößerten und nur teilweise dargestellten axialen Schnittansicht. Im oberen Bereich der Drehachse 2 ist der gewünschte Fluidstrom mittels Pfeilen dargestellt. In der unteren Hälfte der Schnittansicht ist der tatsächlich auftretende Fluidstrom gezeigt, wobei wiederum gut erkennbar ist, dass nach dem Passieren des Leitblechs 9 ein Teilstrom des Fluids in radialer Richtung nach unten abfließt und somit nur ein deutlich verringerter Fluidstrom tatsächlich durch die Fluiddurchtrittsöffnung 11 hindurchtritt.

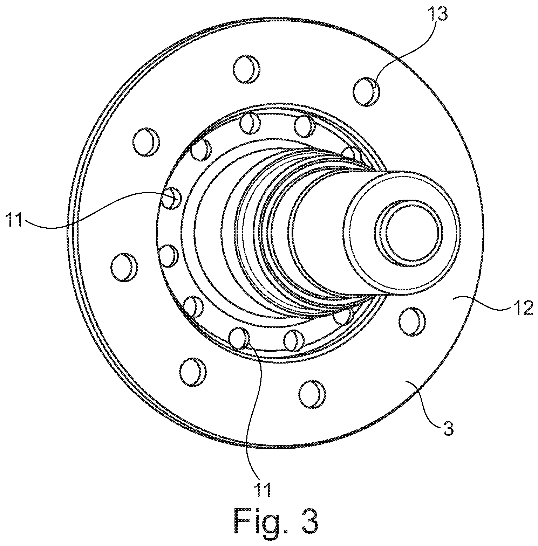

Fig. 3 zeigt eine perspektivische Ansicht der ersten Kupplungsseite, die als drehende Welle mit einem angeformten Flansch 12 ausgebildet ist. In dem Flansch 12 sind sowohl Fluiddurchtrittsöffnungen 11 als auch Befestigungsbohrungen 13 vorgesehen, die jeweils auf einem Kreissegment gleichmäßig über den Umfang verteilt angeordnet sind.

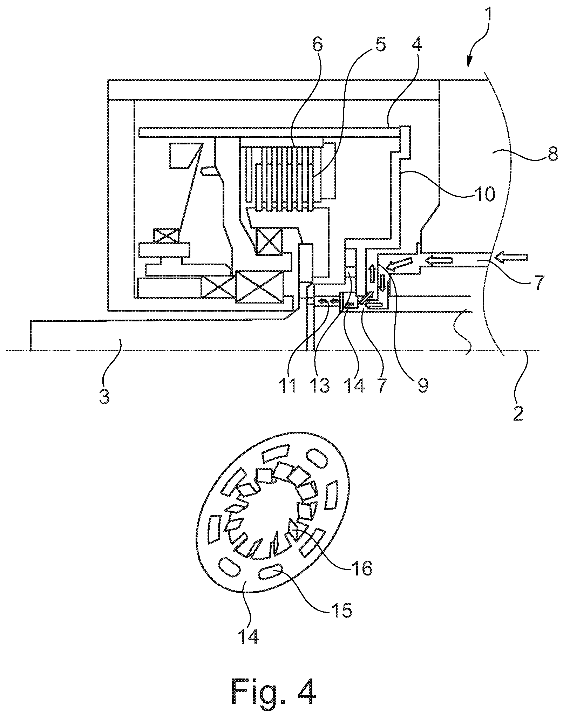

Die Fig. 4 zeigt eine axiale Schnittansicht durch eine Kupplungseinrichtung 1. Hierbei ist in der Fluidleitung 7 unmittelbar hinter dem Leitblech 9 eine Fördereinrichtung 14 angeordnet, die das zuströmende Fluid durch die Fluiddurchtrittsöffnung 11 in die Kupplungseinrichtung 1 fördert. Die Fördereinrichtung 14 ist über die Befestigungsbohrung 13 mit der als Welle ausgebildeten ersten Kupplungsseite 3 fest verbunden und bewegt sich rotierend mit dieser mit. Durch Ausübung einer Förderkraft in axialer Richtung parallel zur Drehachse 2 auf das Fluid wird dessen Durchströmung durch die Fluiddurchtrittsöffnung 11 verbessert. Ein Anstauen des Fluids vor der Fluiddurchtrittsöffnung 11 wird damit wirksam vermieden. Gleichzeitig kann die radiale Abströmung des Fluids zwischen dem rotierenden Abschnitt 10 und dem Leitblech 9 mit der Fördereinrichtung 14 signifikant reduziert oder ganz vermieden werden. Im unteren Bereich der Fig. 4 ist die Fördereinrichtung 14 in Alleinstellung in einer perspektivischen Ansicht dargestellt. Die Fördereinrichtung 14 weist am äußeren Umfang Durchbrüche 15 auf, die eine Verbindung mit der ersten Kupplungsseite 3 ermöglichen. Hierbei ist die Anzahl und Lage der Durchbrüche 15 so gewählt, dass diese mit den Befestigungsbohrungen 13 korrespondieren und bspw. mittels Nieten verbunden werden können. Weiterhin weist die Fördereinrichtung 14 eine Mehrzahl von Rotorschaufeln 16 auf, die so angewinkelt sind, dass bei einer Rotation der Fördereinrichtung 14 um die Drehachse 2 wenigstens eine axiale Förderkraft auf das Fluid ausüben. Die Förderkraft weist dazu eine in der Bildebene nach links gerichtete achsparallele Kraftkomponente aufweist, um damit das Durchströmen des Fluids durch die Fluiddurchtrittsöffnung 11 zu unterstützen. Die Beölung der gesamten Kupplungseinrichtung mit dem Fluid wird dadurch verbessert, da wesentlich mehr Fluid in den Bereich hinter die Fluiddurchtrittsöffnungen 11 gefördert wird.

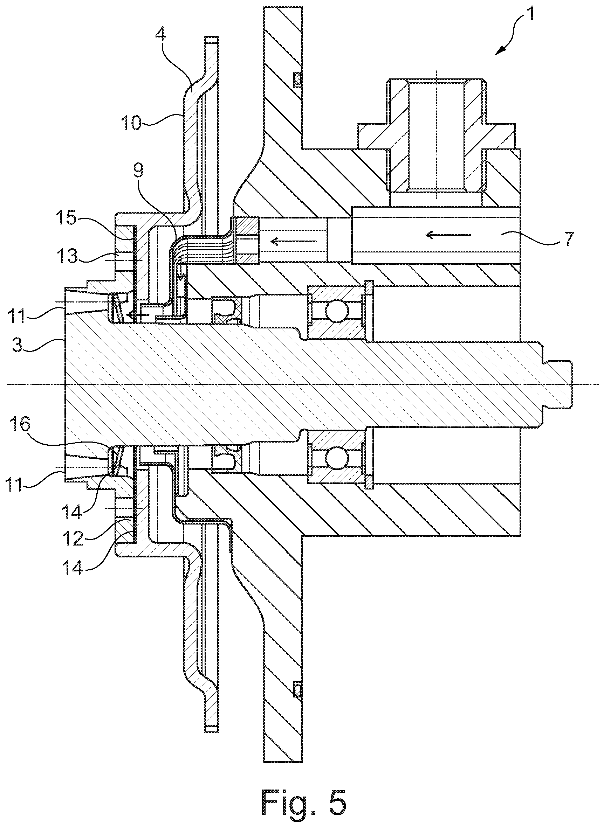

In Fig. 5 ist eine Kupplungseinrichtung 1 nochmals teilweise in einer axialen Schnittansicht dargestellt. Gut erkennbar ist bei dieser Ansicht, dass die Fördereinrichtung 14 besonders einfach in die Kupplungseinrichtung 1 integriert werden kann. Besonders vorteilhaft ist dabei vorgesehen, dass die Rotorschaufeln 16 unmittelbar vor der Fluiddurchtrittsöffnung 11 angeordnet sind, damit in besonders effizienter Weise die Förderkraft in axialer Richtung auf das Fluid ausüben können. Die Fördereinrichtung 14 ist aus einem dünnen Blech oder als einteiliges Kunststoffteil gefertigt, das nur minimalen Bauraum benötigt und bündig am Flansch 12 der ersten Kupplungsseite anliegt. Dabei ragen die angestellten Rotorschaufeln 16 in dem Bauraum unmittelbar vor der Fluiddurchtrittsöffnung 11 hinein. Wie anhand der Pfeile dargestellt, tritt auch bei dieser Ausführungsform kein Fluidverlust oder nur äußerst geringer Fluidverlust in radialer Richtung auf, da der Fluidstrom in axialer Richtung durch die Fördereinrichtung 14 unterstützt wird.

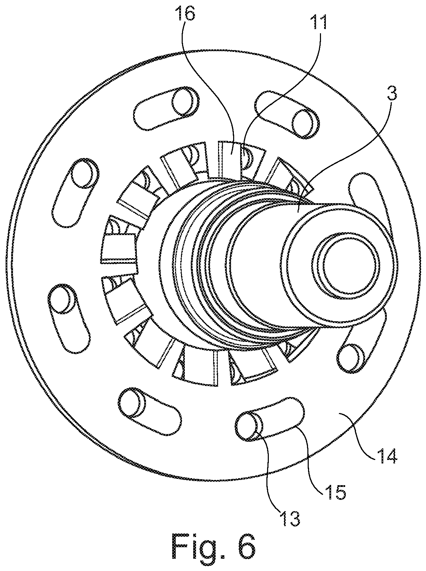

Schließlich zeigt Fig. 6 nochmals die erste Kupplungsseite 3 in einer perspektivischen Ansicht. Auf der ersten Kupplungsseite 3 ist die Fördereinrichtung 14 angeordnet, wobei die Befestigungsbohrungen 13 und die Durchbrüche 15 miteinander fluchten und bspw. durch nicht dargestellte Nieten oder Schrauben miteinander verbunden werden können. Gut erkennbar ist in dieser Ansicht auch, dass die angestellten Rotorschaufeln 16 jeweils unmittelbar vor den Fluiddurchtrittsöffnungen 11 angeordnet sind, um eine möglichst effiziente Fluidförderung durch eine effiziente Ausübung der Förderkraft auf das Fluid zu erreichen. Wie zu sehen ist, benötigt die Fördereinrichtung 14 nur einen äußerst geringen Bauraum und kann somit in nahezu alle bestehenden Kupplungseinrichtungen in besonders einfacher Weise integriert werden. Zudem kann die Fördereinrichtung mit einem äußerst geringen Aufwand und damit kostengünstig hergestellt werden.

### Bezugszeichenliste

- 1: Kupplungseinrichtung
- 2: Drehachse
- 3: Erste Kupplungsseite
- 4: Zweite Kupplungsseite
- 5: Erster Reibpartner
- 6: Lamellenkupplung
- 7: Fluidleitung
- 8: Gehäuse
- 9: Leitblech
- 10: Rotierender Abschnitt
- 11: Fluiddurchtrittsöffnung
- 12: Flansch
- 13: Befestigungsbohrung
- 14: Fördereinrichtung
- 15: Durchbruch
- 16: Rotorschaufel
- 17: Zweiter Reibpartner

## Patentansprüche

1. Kupplungseinrichtung (1) zum Übertragen eines Drehmoments um eine Drehachse (2) zwischen einer ersten Kupplungsseite (3) und einer zweiten Kupplungsseite (4), wobei die Kupplungseinrichtung (1) aufweist:
zumindest einen drehmomentschlüssig mit der ersten Kupplungsseite (3) verbundenen ersten Reibpartner (5) und
zumindest einen drehmomentschlüssig mit der zweiten Kupplungsseite (4) verbundenen zweiten Reibpartner (17), wobei der erste Reibpartner (5) und der zweite Reibpartner (17) in einem feststehenden Gehäuse (8) angeordnet sind und durch eine Anpresskraft in Reibeingriff bringbar sind, um das Drehmoment zwischen der ersten Kupplungsseite (3) und der zweiten Kupplungsseite (4) zu übertragen,
wobei eine sich durch das feststehende Gehäuse (8) und wenigstens die sich drehende erste Kupplungsseite (39) oder zweite Kupplungsseite (4) erstreckende Fluidleitung (7) zum Zuleiten eines Fluids in die Kupplungseinrichtung (1) vorgesehen ist, und
in der Fluidleitung (7) innerhalb der Kupplungseinrichtung (1) eine Fördereinrichtung (14) zum Fördern eines Fluidstroms in axialer Richtung der Drehachse (2) vorgesehen ist,
**dadurch gekennzeichnet, dass**
die Fördereinrichtung (14) in einer Strömungsrichtung des Fluids in einem Bereich unmittelbar hinter einem gehäuseseitigen feststehenden Leitblech (9) und vor axialen Fluiddurchtrittsöffnungen (11) der ersten Kupplungsseite (3) angeordnet ist und
die Fördereinrichtung (14) wenigstens eine Rotorschaufel (16) oder Statorschaufel aufweist.

2. Kupplungseinrichtung (1) nach Anspruch 1, **dadurch gekennzeichnet, dass** die Kupplungseinrichtung (1) eine Trennkupplung in einem Hybridmodul ist.

3. Kupplungseinrichtung (1) nach Anspruch 1 oder 2, **dadurch gekennzeichnet, dass** die Fördereinrichtung (14) wenigstens an der ersten Kupplungsseite (3) oder der zweiten Kupplungsseite (4) angeordnet ist und dadurch die geförderte Fluidmenge drehzahlabhängig ist.

4. Kupplungseinrichtung (1) nach einem der Ansprüche 1 bis 3, **dadurch gekennzeichnet, dass** die Kupplungseinrichtung (1) eine Lamellenkupplung (6) und insbesondere eine Nasskupplung ist und das zu fördernde Fluid ein Öl ist.

5. Kupplungseinrichtung (1) nach einem der Ansprüche 1 bis 4, **dadurch gekennzeichnet, dass** die wenigstens eine Rotorschaufel (16) oder Statorschaufel in einem drehenden Zustand in axialer Richtung eine Förderkraft auf das Fluid ausübt.

6. Kupplungseinrichtung (1) nach einem der Ansprüche 1 bis 5, **dadurch gekennzeichnet, dass** die Fördereinrichtung (14) eine Mehrzahl bewegter Rotorschaufeln (16) aufweist.

7. Kupplungseinrichtung (1) nach einem der Ansprüche 1 bis 6, **dadurch gekennzeichnet, dass** die Fördereinrichtung (14) aus Kunststoff oder Metall besteht.

## Claims

1. A clutch device (1) for transmitting a torque about an axis of rotation (2) between a first clutch side (3) and a second clutch side (4), wherein the clutch device (1) comprises:
at least one first friction partner (5) connected in a torque-locking manner to the first clutch side (3), and
at least one second friction partner (17) connected in a torque-locking manner to the second clutch side (4), wherein the first friction partner (5) and the second friction partner (17) are arranged in a stationary housing (8) and are able to be brought into frictional engagement by means of a pressing force, in order to transmit the torque between the first clutch side (3) and the second clutch side (4), wherein a fluid line (7), extending through the stationary housing (8) and at least the rotating first clutch side (39) or second clutch side (4), is provided for supplying a fluid into the clutch device (1), and
a conveying device (14) for conveying a fluid flow in the axial direction of the axis of rotation (2) is provided in the fluid line (7) within the clutch device (1),
**characterised in that**
the conveying device (14) is arranged in a flow direction of the fluid in a region directly behind a stationary guide plate (9) on the housing side and in front of axial fluid openings (11) on the first clutch side (3) and
the conveying device (14) has at least one rotor blade (16) or stator blade.

2. The clutch device (1) according to claim 1, **characterised in that** the clutch device (1) is a disconnect clutch in a hybrid module.

3. The clutch device (1) according to claim 1 or 2, **characterised in that** the conveying device (14) is arranged at least on the first clutch side (3) or the second clutch side (4) and as a result the quantity of fluid conveyed is speed-dependent.

4. The clutch device (1) according to any one of claims 1 to 3, **characterised in that** the clutch device (1) is a multi-plate clutch (6) and in particular a wet clutch and the fluid to be conveyed is an oil.

5. The clutch device (1) according to any one of claims 1 to 4, **characterised in that**, in a rotating state, the at least one rotor blade (16) or stator blade exerts a conveying force on the fluid in the axial direction.

6. The clutch device (1) according to any one of claims 1 to 5, **characterised in that** the conveying device (14) has a plurality of moving rotor blades (16).

7. The clutch device (1) according to any one of claims 1 to 6, **characterised in that** the conveying device (14) consists of plastic or metal.

## Revendications

1. Dispositif d'accouplement (1) destiné à transmettre un couple de rotation autour d'un axe de rotation (2) entre un premier côté d'accouplement (3) et un second côté d'accouplement (4), le dispositif d'accouplement (1) comprenant :
au moins un premier partenaire de friction (5) relié par engagement de couple de rotation au premier côté d'accouplement (3) et
au moins un second partenaire de friction (17) relié par engagement de couple de rotation au second côté d'accouplement (4), le premier partenaire de friction (5) et le second partenaire de friction (17) étant disposés dans un boîtier fixe (8) et pouvant être amenés en engagement de friction par une force de pression pour transmettre le couple de rotation entre le premier côté d'accouplement (3) et le second côté d'accouplement (4), un conduit de fluide (7), s'étendant à travers le boîtier fixe (8) et au moins le premier côté d'accouplement (39) ou le second côté d'accouplement (4) en rotation, étant prévu pour amener un fluide dans le dispositif d'accouplement (1), et
un dispositif de transport (14) destiné à transporter un flux de fluide dans la direction axiale de l'axe de rotation (2) est prévu dans le conduit de fluide (7) à l'intérieur du dispositif d'accouplement (1),
**caractérisé en ce que**
le dispositif de transport (14) est disposé dans une direction d'écoulement du fluide dans une zone immédiatement derrière une plaque de guidage fixe (9) côté boîtier et devant les ouvertures axiales de passage de fluide (11) du premier côté d'accouplement (3) et
le dispositif de transport (14) comporte au moins une pale de rotor (16) ou une pale de stator.

2. Dispositif d'accouplement (1) selon la revendication 1, **caractérisé en ce que** le dispositif d'accouplement (1) est un accouplement de séparation dans un module hybride.

3. Dispositif d'accouplement (1) selon la revendication 1 ou 2, **caractérisé en ce que** le dispositif de transport (14) est disposé au moins sur le premier côté d'accouplement (3) ou le second côté d'accouplement (4) et, par conséquent, la quantité de fluide transportée dépend de la vitesse de rotation.

4. Dispositif d'accouplement (1) selon l'une quelconque des revendications 1 à 3, **caractérisé en ce que** le dispositif d'accouplement (1) est un embrayage multidisque (6) et notamment un embrayage à bain d'huile et le fluide à transporter est une huile.

5. Dispositif d'accouplement (1) selon l'une quelconque des revendications 1 à 4, **caractérisé en ce que** l'au moins une pale de rotor (16) ou une pale de stator dans un état rotatif exerce une force de transport sur le fluide dans le sens axial.

6. Dispositif d'accouplement (1) selon l'une quelconque des revendications 1 à 5, **caractérisé en ce que** le dispositif de transport (14) comporte plusieurs pales de rotor (16) mobiles.

7. Dispositif d'accouplement (1) selon l'une quelconque des revendications 1 à 6, **caractérisé en ce que** le dispositif de transport (14) est en matière plastique ou en métal.
